# EUROPÄISCHE PATENTANMELDUNG

(11) **EP 3 854 627 A1**
(43) Veröffentlichungstag der Anmeldung: **28.07.2021**
(21) Anmeldenummer: 21020013.5
(22) Anmeldetag: 13.01.2021
(51) Int. Cl.: B60L 53/10, B60L 53/14, B60L 53/16, B60L 53/18, B60L 53/302

(54) **LADEKABEL FÜR EIN ELEKTRISCH BETRIEBENES KRAFTFAHRZEUG**

(30) Priorität: 21.01.2020 DE 102020101257
(71) Anmelder: Dr. Ing. h.c. F. Porsche AG, 70435 Stuttgart (DE)
(72) Erfinder: Metzger, Christian, 71732 Tamm (DE)

(57) **Zusammenfassung**

Die Erfindung betrifft ein Ladekabel (3) für ein elektrisch betriebenes Kraftfahrzeug (1). Das Ladekabel (3) umfasst einen Ladestecker (4) mit einem Gehäuse (10) und einer im Inneren des Gehäuses (10) angeordneten Temperiervorrichtung (16). Das Gehäuse weist einen Haltegriff (20) auf. Der Ladestecker (4) umfasst ferner ein zwischen dem Gehäuse (10) und der Temperiervorrichtung (16) angeordnetes Wärmeleitelement (19).

## Beschreibung

Die Erfindung betrifft ein Ladekabel für ein elektrisch betriebenes Kraftfahrzeug sowie ein Verfahren zum Laden einer Traktionsbatterie eines elektrisch batteriebetriebenen Kraftfahrzeugs.

Ein solches Ladekabel ist häufig Bestandteil einer Ladestation. Eine solche Ladestation kann auch als Ladesäule bezeichnet werden. Ladestationen werden in der Regel im Freien errichtet, meist ohne dass für die Ladestation eine Überdachung vorgesehen ist.

Das Ladekabel und insbesondere ein Ladestecker des Ladekabels einer solchen Ladestation sind daher häufig der Witterung und insbesondere dem Sonnenlicht ausgesetzt. Das Sonnenlicht kann den Ladestecker, insbesondere ein Gehäuse des Ladesteckers aufheizen, sodass ein Berühren des Ladesteckers, insbesondere ein Berühren eines Haltegriffs des Gehäuses des Ladesteckers für einen Benutzer, der mithilfe der Ladestation sein Kraftfahrzeug laden möchte, sehr unangenehm sein kann.

Aus dem Stand der Technik sind Ladekabel der eingangs genannten Art bekannt, die eine aktive Kühlvorrichtung zum Kühlen von Anschlusskontakten des Ladesteckers umfassen. Die aktive Kühlvorrichtung ist jedoch thermisch von dem Gehäuse des Ladesteckers, und insbesondere von dem Haltegriff des Gehäuses isoliert, weshalb eine Kühlung des Haltegriffs mittels der aktiven Kühlvorrichtung nicht möglich ist. Ein solches Ladekabel ist beispielsweise aus der Druckschrift DE 10 2010 050 562 B3 bekannt.

Es ist die Aufgabe der vorliegenden Erfindung, ein Ladekabel mit einer von Witterungsverhältnissen unabhängigen, einfachen und sicheren Handhabung vorzuschlagen.

Die Aufgabe wird durch ein Ladekabel für ein elektrisch betriebenes Kraftfahrzeug nach Anspruch 1 und ein Verfahren zum Laden einer Traktionsbatterie eines elektrisch betriebenen Kraftfahrzeugs nach Anspruch 8 gelöst.

Das erfindungsgemäße Ladekabel umfasst einen Ladestecker mit einem Gehäuse und einer im Inneren des Gehäuses angeordneten Temperiervorrichtung, wobei das Gehäuse einen Haltegriff aufweist. Der Ladestecker umfasst ferner ein zwischen dem Gehäuse und der Temperiervorrichtung angeordnetes Wärmeleitelement. Bei dem Haltegriff kann es sich um einen Halteabschnitt des Ladekabels beziehungsweise des Ladesteckers handeln, wie er bei herkömmlichen Anwendungen verwendet wird. Der Haltegriff kann aber auch mit einem Griffteil ausgestattet sein, das mit einer Hand umgriffen werden kann. Durch die Kombination der Temperiervorrichtung mit dem Wärmeleitelement kann besonders vorteilhaft in einem Bereich des Ladekabels beziehungsweise des Ladesteckers, der bei einem Ladevorgang mit mindestens einer Hand umgriffen wird, eine komfortable Temperatur bereitgestellt werden. Darüber hinaus kann durch die Kombination des Wärmeleitelements mit der Temperiervorrichtung eine Temperaturverteilung in dem Ladekabel beziehungsweise in dem Ladestecker höchst wirksam homogenisiert werden.

Die Temperiervorrichtung kann zum Kühlen des Ladesteckers, insbesondere zum Kühlen des Haltegriffs des Gehäuses des Ladesteckers dienen und/oder zum Erhitzen des Ladesteckers, insbesondere zum Erhitzen des Haltegriffs des Gehäuses des Ladesteckers dienen. So kann auf einfache Art und Weise ein gewünschtes Temperaturniveau in dem Ladestecker aufrechterhalten werden, und zwar insbesondere auch dann, wenn in der Umgebung des Ladesteckers extrem niedrige oder extrem hohe Temperaturen auftreten.

In einer bevorzugten Ausgestaltung ist das Wärmeleitelement aus einem wärmeleitenden und/oder elektrisch isolierenden Werkstoff gefertigt. Besonders vorteilhaft übt das Wärmeleitelement eine Doppelfunktion aus. Zum einen wird durch das Wärmeleitelement die Wärmeleitung innerhalb des Ladesteckers wirksam verbessert. Darüber hinaus wird mit dem Wärmeleitelement eine gewünschte elektrische Isolierung des Ladesteckers wirksam verbessert.

Vorzugsweise ist das Wärmeleitelement aus Mica, Bornitrid, Aluminiumnitrid und/oder Tantaloxid gefertigt. Mica ist ein Schichtsilikat, das auch als Glimmer bezeichnet werden kann. Mit diesen Materialien kann die gewünschte Funktion, insbesondere die gewünschte Doppelfunktion, des Wärmeleitelements in Kombination mit der Temperiervorrichtung in dem Ladestecker realisiert werden.

In einer bevorzugten Ausgestaltung ist das Wärmeleitelement als Wärmeleitpad ausgebildet. Das Wärmeleitpad kann auch als Gap-Pad bezeichnet werden. Durch das Gap-Pad wird eine höchst wirksame Wärmeschnittstelle zwischen der Temperiervorrichtung und dem Gehäuse des Ladesteckers bereitgestellt. Das Gap-Pad ist vorteilhaft gut verformbar und mit einer eher niedrigen Härte ausgestattet.

Vorzugsweise weist der Ladestecker wenigstens einen Temperatursensor auf. Bei dem Temperatursensor kann es sich um einen herkömmlichen Temperatursensor handeln. Mit dem Temperatursensor kann vorteilhaft eine Umgebungstemperatur in der Umgebung des Ladesteckers erfasst werden.

In einer bevorzugten Ausgestaltung ist der Temperatursensor an einer Außenseite des Gehäuses oder an einer Außenseite des Haltegriffs angeordnet. Dabei ist der Temperatursensor vorteilhaft an einer Stelle angeordnet, die bei einem Ladevorgang nicht unmittelbar in Kontakt mit einer Hand kommt. Allerdings kann es vorteilhaft sein, den Temperatursensor in der Nähe eines Bereichs anzuordnen, der mit einer Hand in Kontakt kommt.

In einer weiteren bevorzugten Ausgestaltung umfasst der Ladestecker wenigstens zwei Anschlusskontakte, wobei der Temperatursensor benachbart zu einem der wenigstens zwei Anschlusskontakte angeordnet ist. Dabei kann insbesondere der Temperatursensor an einem der wenigstens zwei Anschlusskontakte anliegen. So kann höchst effektiv eine für einen wirksamen Ladevorgang wichtige Temperatur im Bereich der Anschlusskontakte erfasst werden.

Ein weiteres bevorzugtes Ausführungsbeispiel des Ladekabels ist dadurch gekennzeichnet, dass die Temperiervorrichtung einen Vorlaufpfad, der entlang eines ersten Leiters verläuft und einen Rücklaufpfad umfasst, der entlang eines zweiten Leiters verläuft. Es kann vorteilhaft sein, wenn der Vorlaufpfad entlang des Leiters verläuft, der mehr Temperierung benötigt. Bei dem Temperiermedium, mit welchem die Temperiervorrichtung betrieben wird, handelt es sich vorzugsweise um ein flüssiges Temperiermediumn. Zu diesem Zweck umfasst die Temperiervorrichtung Temperierleitungen oder Temperierkanäle, durch die das Temperiermedium hindurch geleitet wird. Der Vorlaufpfad und der Rücklaufpfad der Temperiervorrichtung sind vorteilhaft an einen Temperierkreislauf einer Ladesäule angeschlossen.

Ein weiteres bevorzugtes Ausführungsbeispiel des Ladekabels ist dadurch gekennzeichnet, dass der Vorlaufpfad und der Rücklaufpfad in dem Gehäuse von dem Wärmeleitelement umgeben sind. Der Vorlaufpfad und der Rücklaufpfad, insbesondere entsprechende Temperierleitungen oder Temperierkanäle, können ganz oder teilweise von dem Wärmeleitelement umgeben sein. Besonders vorteilhaft ist das Wärmeleitelement zwischen den Temperierleitungen beziehungsweise Temperierkanälen und äußeren Gehäusewandungen des Gehäuses angeordnet. Das Wärmeleitelement kann einteilig oder mehrteilig ausgeführt sein.

Ein weiteres bevorzugtes Ausführungsbeispiel des Ladekabels ist dadurch gekennzeichnet, dass der Haltegriff ein Griffteil umfasst, durch das ein von einem Leitervorlaufpfad des Vorlaufpfads abgezweigter Griffvorlaufpfad des Vorlaufpfads verläuft. Der Leitervorlaufpfad und der Griffvorlaufpfad sind vorteilhaft von dem Wärmeleitelement umgeben. Über den Griffvorlaufpfad kann der Haltegriff mit dem Griffteil sehr komfortabel temperiert werden. Das Griffteil umfasst vorteilhaft einen Durchgriff für eine Hand. Dadurch wird die Handhabung des Ladekabels erheblich vereinfacht.

Die Erfindung betrifft ferner ein Verfahren zum Laden einer Traktionsbatterie eines elektrisch batteriebetriebenen Kraftfahrzeugs, umfassend folgende Verfahrensschritte:
- Bereitstellen eines erfindungsgemäßen Ladekabels;
- Anschließen des Ladesteckers des Ladekabels an eine Ladebuchse des Kraftfahrzeugs;
- Kühlen oder Erwärmen des Ladesteckers mittels der Temperiervorrichtung,
insbesondere Kühlen oder Erwärmen des Gehäuses und/oder des Haltegriffs des Ladesteckers mittels der Temperiervorrichtung. Durch die Kombination des Wärmeleitelements mit der Temperiervorrichtung in dem Ladestecker kann die Effizienz beim Laden wirksam erhöht werden.

In einer bevorzugten Ausgestaltung erfolgt das Kühlen oder Erwärmen des Ladesteckers, des Gehäuses und/oder des Haltegriffs vor dem Anschließen des Ladesteckers und/oder nach dem Anschließen des Ladesteckers. Dadurch kann der Komfort beim Laden erhöht werden.

Vorzugsweise wird durch den Temperatursensor kontinuierlich eine Temperatur des Ladesteckers gemessen, wobei das Kühlen oder Erwärmen des Ladesteckers, des Gehäuses und/oder des Haltegriffs in Abhängigkeit der gemessenen Temperatur erfolgt. So kann ein gewünschtes Temperaturniveau sowohl vor einem Ladevorgang als auch beim Ladevorgang selbst wirksam aufrechterhalten werden.

In einer bevorzugten Ausgestaltung wird mittels eines Helligkeitssensors einer mit dem Ladekabel verbundenen Ladesäule eine vorherrschende Sonneneinstrahlungsintensität gemessen, wobei das Kühlen oder Erwärmen des Ladesteckers, des Gehäuses und/oder des Haltegriffs in Abhängigkeit der gemessenen Sonneneinstrahlungsintensität erfolgt. So kann die Effizienz beim Aufrechterhalten des gewünschten Temperaturniveaus noch weiter erhöht werden.

Die Erfindung betrifft des Weiteren ein Computerprogrammprodukt, das mindestens ein nichtflüchtiges computerlesbares Speichermedium aufweist, auf dem computerlesbare Programmanweisungen gespeichert sind, wobei die computerlesbaren Programmanweisungen Programmanweisungen umfassen, die dazu ausgelegt sind, ein vorab beschriebenes Ladekabel zu veranlassen, das vorab beschriebene Verfahren zum Laden einer Traktionsbatterie eines elektrisch betriebenen Kraftfahrzeugs auszuführen.

Einzelheiten und weitere Vorteile des erfindungsgemäßen Ladekabels und des erfindungsgemäßen Verfahrens werden anhand eines nachfolgend beschriebenen Ausführungsbeispiels erläutert.

Es zeigen:
Figur 1 ein Ladekabel mit einem Ladestecker in einem Längsschnitt; und
Figur 2 eine schematische Darstellung einer Ladestation mit einer Ladesäule, an der ein elektrisch angetriebenes Kraftfahrzeug mit Hilfe eines Ladekabels elektrisch aufgeladen wird.

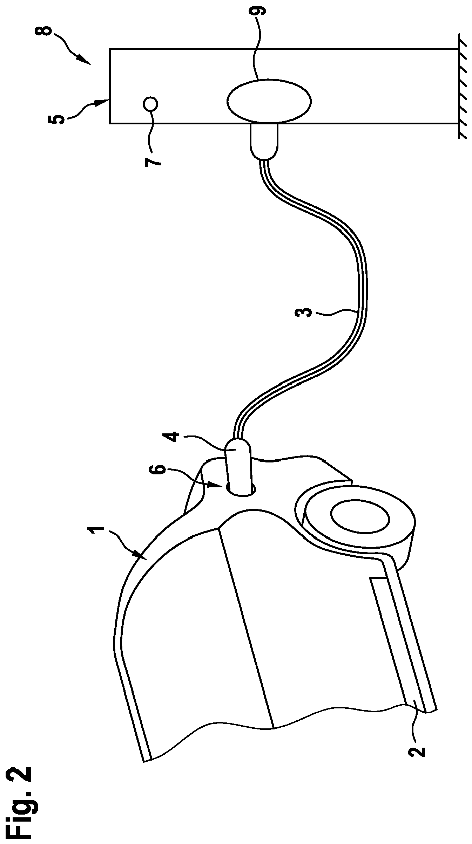

In Figur 2 ist ein elektrisch angetriebenes oder betriebenes Kraftfahrzeug 1 schematisch dargestellt. Das elektrisch betriebene Kraftfahrzeug 1 umfasst eine Traktionsbatterie 2 zum Speichern von elektrischer Energie, die im Betrieb des elektrisch betriebenen Kraftfahrzeugs 1 zum Antrieb verwendet wird.

Zum Aufladen befindet sich das Kraftfahrzeug 1 an einer Ladestation 8. Die Ladestation 8 umfasst eine Ladesäule 5. Zum Aufladen der Traktionsbatterie 2 ist die Ladesäule 5 über ein Ladekabel 3 mit dem Kraftfahrzeug 1 verbunden.

Das Ladekabel 3 umfasst einen Ladestecker 4, der in eine Ladebuchse 6 des Kraftfahrzeugs 1 eingesteckt ist. Die Ladesäule 5 ist mit einem Helligkeitssensor 7 ausgestattet.

Darüber hinaus umfasst die Ladesäule 5 an der Ladestation 8 einen Temperierkreislauf 9. Das Ladekabel 3 ist zur Temperierung an den Temperierkreislauf 9 angeschlossen.

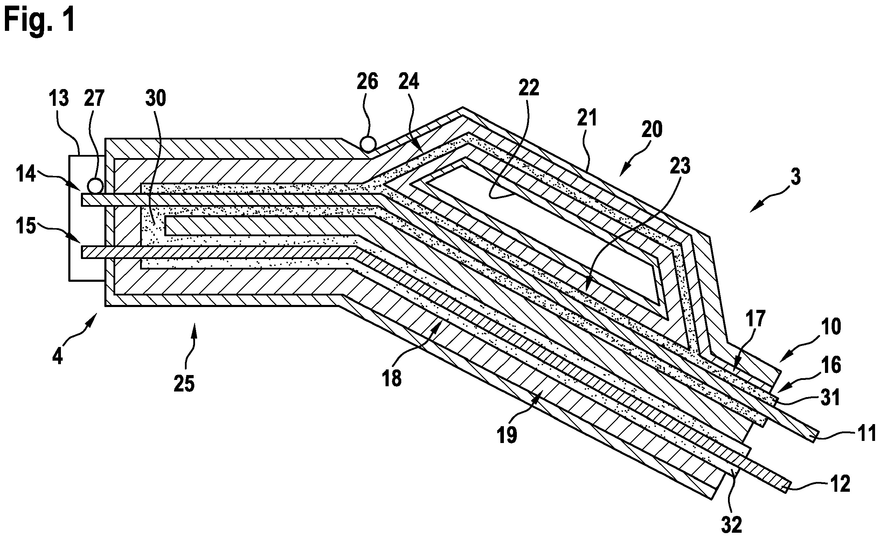

In Figur 1 ist ein Ende des Ladekabels 3 mit dem Ladestecker 4 vergrößert im Längsschnitt dargestellt. Der Ladestecker 4 umfasst ein Gehäuse 10. Das Ladekabel 3 mit dem Ladestecker 4 umfasst zwei elektrische Leiter 11 und 12, die sich durch das Gehäuse 10 des Ladesteckers 4 zu Anschlusskontakten 14, 15 des Ladesteckers 4 erstrecken.

Die Anschlusskontakte 14, 15 sind in einem Steckverbindungselement 13 vorgesehen, das zum Herstellen einer Steckverbindung dient, wenn der Ladestecker 4, wie man in Figur 2 sieht, in die Ladebuchse 6 des Kraftfahrzeugs 1 eingesteckt wird.

Der Ladestecker 4 mit dem Ladekabel 3 ist mit einer Temperiervorrichtung 16 ausgestattet. Die Temperiervorrichtung 16 umfasst zwei Temperierleitungen 31, 32. Über die Temperierleitungen 31, 32 ist die Temperiervorrichtung 16 an den Temperierkreislauf 9 in Figur 2 angeschlossen.

Die Temperiervorrichtung 16 umfasst einen Vorlaufpfad 17 und einen Rücklaufpfad 18. Der Vorlaufpfad 17 steht über einen Verbindungspfad 30 mit dem Rücklaufpfad 18 in Verbindung. Der Verbindungspfad 30 ist an einem freien Ende des Ladesteckers 4 in der Nähe der Anschlusskontakte 14, 15 angeordnet.

Ein Wärmeleitelement 19 ist zwischen der Temperiervorrichtung 16 und dem Gehäuse 10 des Ladesteckers 4 angeordnet. In dem Gehäuse 10 umgibt das Wärmeleitelement 19 die Temperiervorrichtung 16 mit dem Vorlaufpfad 17 und dem Rücklaufpfad 18. Der Vorlaufpfad 17 und der Rücklaufpfad 18 mit den Temperierleitungen 31, 32 erstrecken sich durch das Wärmeleitelement 19 hindurch.

Der Ladestecker 4 umfasst einen Haltegriff 20 mit einem Griffteil 21 und einem Durchgriff 22. Zur Temperierung des Griffteils 21 ist ein Griffvorlaufpfad 24 von einem Leitervorlaufpfad 23 des Vorlaufpfads 17 abgezweigt. Der Leitervorlaufpfad 23 umgibt den Leiter 11. Der Griffvorlaufpfad 24 verläuft durch das Griffteil 21.

Ein Temperatursensor 26 ist außen an dem Gehäuse 10 vorgesehen. Der Temperatursensor 26 ist zwischen einem Gehäuseteil 25 und dem Griffteil 21 des Ladesteckers 4 platziert. Ein Temperatursensor 27 ist unmittelbar benachbart zu dem Anschlusskontakt 14 in dem Steckverbindungselement 13 des Ladesteckers 4 platziert.

Die Anmeldung betrifft das Ladekabel 3 für das elektrisch betriebene Kraftfahrzeug 1 und ein Verfahren zum Laden der Traktionsbatterie 2 des elektrisch batteriebetriebenen Kraftfahrzeugs 1.

Das anmeldungsgemäße Ladekabel 3 umfasst den Ladestecker 4 mit dem Gehäuse 10 und der im Inneren des Gehäuses 10 angeordneten Temperiervorrichtung 16. Das Gehäuse 10 weist den Haltegriff 20 auf. Der Ladestecker 4 umfasst ferner ein zwischen dem Gehäuse 10 und der Temperiervorrichtung 16 angeordnetes Wärmeleitelement 19.

Das Ladekabel 4 ist Bestandteil der Ladestation 8 zum Laden der Traktionsbatterie 16 des elektrisch betriebenen Kraftfahrzeugs 1. Die Ladestation 8 kann auch als Ladesäule 5 bezeichnet werden.

Das Ladekabel 4 kann insbesondere ein Gleichstrom-Ladekabel sein, insbesondere ein Hochleistungsgleichstrom-Ladekabel sein, welches für Spannungen von bis zu 1000 V und Stromstärken von bis zu 500 A ausgelegt ist.

Die Temperiervorrichtung 16 kann eine aktive Temperiervorrichtung 16 sein. Die Temperiervorrichtung 16 kann mit wenigstens einer Temperierleitung 31, 32 versehen sein, durch welche ein Temperierungsmittel strömt. Die Temperierleitung 31, 32 kann mit einem Temperierkreislauf 9 der Ladestation 8 fluidkommunizierend verbunden sein. Die Temperiervorrichtung 16 kann eine Heizvorrichtung und/oder eine Kühlvorrichtung sein.

Das Wärmeleitelement 19 ist ausgebildet, um Wärme und/oder Kälte von der Temperiervorrichtung 16 in das Gehäuse 10 und insbesondere in den Haltegriff 20 des Gehäuses 10 zu leiten.

Heizt sich aufgrund der Witterungsverhältnisse oder aufgrund einer bei einem Ladevorgang des Kraftfahrzeugs 1 erzeugten Abwärme das Gehäuse 10 des Ladesteckers 4 und insbesondere der Haltegriff 20 derart auf, dass eine Berührung durch einen Benutzer unangenehm sein könnte, so kann mittels der Temperiervorrichtung 16 der Ladestecker 4 und insbesondere das Gehäuse 10 und/oder der Haltegriff 20 gekühlt werden.

Kühlt sich aufgrund kalter Witterungsverhältnisse das Gehäuse 10 des Ladesteckers 8 und insbesondere der Haltegriff 20 zu sehr ab, so kann mittels der Temperiervorrichtung 16 der Ladestecker 8 und insbesondere das Gehäuse 10 und/oder der Haltegriff 20 erwärmt werden.

Das Wärmeleitelement 19 kann aus einer auf einer Innenseite des Gehäuses 10 aufgetragenen Beschichtung bestehen.

Das Wärmeleitelement 19 kann aus einem wärmeleitenden und/oder elektrisch isolierenden Werkstoff gefertigt sein. Das Wärmeleitelement 19 kann aus Mica, Bornitrid, Aluminiumnitrid und/oder Tantaloxid gefertigt sein und insbesondere aus einer auf der Innenseite des Gehäuses 10 aufgetragenen Beschichtung aus diesen oder einem dieser Werkstoffe(n) bestehen. Mica ist ein Schichtsilikat, das auch als Glimmer bezeichnet werden kann.

Das Wärmeleitelement 19 kann als Wärmeleitpad ausgebildet sein. Ein solches Wärmeleitpad kann auch als Gap-Pad bezeichnet werden.

Das Wärmeleitelement 19 und/oder die Beschichtung und/oder das Wärmeleitpad kann an der Innenseite des Gehäuses und insbesondere an der Innenseite des Gehäuses 10 im Bereich des Haltegriffs 20 anliegen.

Die Temperierleitung 31, 32 kann ebenfalls mit dem Wärmeleitelement 19 und/oder der Beschichtung und/oder dem Wärmeleitpad in Berührung sein. Alternativ oder zusätzlich kann die Temperierleitung 16 thermisch an das Wärmeleitelement 19 und/oder an die Beschichtung und/oder an das Wärmeleitpad gekoppelt sein.

Der Ladestecker 4 kann wenigstens einen Temperatursensor 26, 27 aufweisen. Der Temperatursensor 26, 27 kann zur Überwachung einer Temperatur des Ladesteckers 4 dienen und vorzugsweise zur Überwachung einer Oberflächentemperatur einer Außenseite des Gehäuses 10 des Ladesteckers 4 insbesondere im Bereich des Haltegriffs dienen.

Hierfür kann der Temperatursensor 26 an einer Außenseite des Gehäuses 10 oder an einer Außenseite des Haltegriffs 20 angeordnet sein.

Der Ladestecker 4 kann wenigstens zwei Anschlusskontakte 14, 15 umfassen, wobei der Temperatursensor 27 benachbart zu einem der wenigstens zwei Anschlusskontakte 14, 15 angeordnet ist. Gemäß dieser Ausgestaltung dient der Temperatursensor 27 zur Überwachung der Temperatur der Anschlusskontakte 14, 15. Anhand der überwachten Temperatur der Anschlusskontakte kann modellbasiert eine Abschätzung der tatsächlichen Oberflächentemperatur des Gehäuses 10 des Steckers 4 ermittelt werden.

Das anmeldungsgemäße Verfahren umfasst folgende Verfahrensschritte:
- Bereitstellen eines anmeldungsgemäßen Ladekabels 3;
- Anschließen des Ladesteckers 4 des Ladekabels 3 an eine Ladebuchse des Kraftfahrzeugs 1;
- Kühlen oder Erwärmen des Ladesteckers 4 mittels der Temperiervorrichtung 16, insbesondere Kühlen oder Erwärmen des Gehäuses 10 und/oder des Haltegriffs 20 des Ladesteckers 4 mittels der Temperiervorrichtung 16.

Das Kühlen oder Erwärmen des Ladesteckers 4, des Gehäuses 10 und/oder des Haltegriffs 20 kann vor dem Anschließen des Ladesteckers 4 und/oder nach dem Anschließen des Ladesteckers 4 erfolgen.

Das Kühlen oder Erwärmen des Ladesteckers 4 kann während eines Ladevorgangs der Traktionsbatterie 2 des Kraftfahrzeugs 1 und/oder vor und/oder nach einem solchen Ladevorgang erfolgen.

Durch den Temperatursensor 26; 27 kann kontinuierlich eine Temperatur des Ladesteckers 4 gemessen werden, wobei das Kühlen oder Erwärmen des Ladesteckers 4, des Gehäuses 10 und/oder des Haltegriffs 20 in Abhängigkeit der gemessenen Temperatur erfolgt. So kann beispielsweise bei Überschreiten einer Höchsttemperatur des Gehäuses 10 und/oder des Haltegriffs 20 mittels der Temperiervorrichtung 16 eine Kühlung des Gehäuses 10 und/oder des Haltegriffs 20 erfolgen und bei Unterschreiten einer Mindesttemperatur des Gehäuses 10 und/oder des Haltegriffs 20 mittels der Temperiervorrichtung 16 ein Erwärmen des Gehäuses 10 und/oder des Haltegriffs 20 erfolgen.

Eine kontinuierliche Messung der Temperatur bedeutet, dass in regelmäßigen Zeitabständen die Temperatur ermittelt wird.

Gemäß dem anmeldungsgemäßen Verfahren kann eine zyklische Aktivierung der Temperiervorrichtung 16 in Abhängigkeit der Oberflächentemperatur des Gehäuses 10 und/oder des Haltegriffs 20 erfolgen, und zwar unabhängig davon, ob zu diesem Zeitpunkt mittels des Ladekabels 3 eine Traktionsbatterie 2 des Kraftfahrzeugs 1 geladen wird oder nicht. Alternativ dazu kann auch eine kontinuierliche Temperierung bei verringerter Temperierleistung der Temperiervorrichtung erfolgen.

Dient der Temperatursensor 27 zur Überwachung der Temperatur der Anschlusskontakte, so kann anhand der überwachten Temperatur modellbasiert eine Abschätzung der tatsächlichen Oberflächentemperatur des Gehäuses 10 des Steckers 4 ermittelt werden.

Mittels eines Helligkeitssensors 7 einer mit dem Ladekabel 3 verbundenen Ladesäule 5 kann eine vorherrschende Sonneneinstrahlungsintensität gemessen werden, wobei das Kühlen oder das Erwärmen des Ladesteckers 4, des Gehäuses 10 und/oder des Haltegriffs 20 in Abhängigkeit der gemessenen Sonneneinstrahlungsintensität erfolgt.

Die gemessene Sonneneinstrahlungsintensität und die überwachte Temperatur der Anschlusskontakte 14, 15 können gemeinsam zu einer modellbasierten Abschätzung der tatsächlichen Oberflächentemperatur des Gehäuses 10 des Steckers 4 verwendet werden.

Das Kühlen oder das Erwärmen des Ladesteckers 4, des Gehäuses 10 und/oder des Haltegriffs 20 kann in Abhängigkeit der modellbasierten Abschätzung erfolgen.

## Patentansprüche

1. Ladekabel (3) für ein elektrisch betriebenes Kraftfahrzeug (1), umfassend einen Ladestecker (4) mit einem Gehäuse (10) und einer im Inneren des Gehäuses (10) angeordneten Temperiervorrichtung (16), wobei das Gehäuse (10) einen Haltegriff (20) aufweist, **dadurch gekennzeichnet, dass** der Ladestecker (4) ferner ein zwischen dem Gehäuse (10) und der Temperiervorrichtung (16) angeordnetes Wärmeleitelement (19) umfasst.

2. Ladekabel nach Anspruch 1, **dadurch gekennzeichnet, dass** das Wärmeleitelement (19) aus einem wärmeleitenden und/oder elektrisch isolierenden Werkstoff gefertigt ist.

3. Ladekabel nach Anspruch 2, **dadurch gekennzeichnet, dass** das Wärmeleitelement (19) aus Mica, Bornitrid, Aluminiumnitrid und/oder Tantaloxid gefertigt ist.

4. Ladekabel nach einem der Ansprüche 1 bis 3, **dadurch gekennzeichnet, dass** das Wärmeleitelement (19) als Wärmeleitpad ausgebildet ist.

5. Ladekabel nach einem der Ansprüche 1 bis 4, **dadurch gekennzeichnet, dass** der Ladestecker (4) wenigstens einen Temperatursensor (26;27) aufweist.

6. Ladekabel nach Anspruch 5, **dadurch gekennzeichnet, dass** der Temperatursensor (26) an einer Außenseite des Gehäuses (10) oder an einer Außenseite des Haltegriffs (20) angeordnet ist.

7. Ladekabel nach Anspruch 5, **dadurch gekennzeichnet, dass** der Ladestecker (4) wenigstens zwei Anschlusskontakte (14,15) umfasst, wobei der Temperatursensor (27) benachbart zu einem der wenigstens zwei Anschlusskontakte (14,15) angeordnet ist.

8. Ladekabel nach einem der vorhergehenden Ansprüche, **dadurch gekennzeichnet, dass** die Temperiervorrichtung (16) einen Vorlaufpfad (17), der entlang eines ersten Leiters (11) verläuft, und einen Rücklaufpfad (18) umfasst, der entlang eines zweiten Leiters (12) verläuft.

9. Ladekabel nach Anspruch 8, **dadurch gekennzeichnet, dass** der Vorlaufpfad (17) und der Rücklaufpfad (18) in dem Gehäuse (10) von dem Wärmeleitelement (19) umgeben sind.

10. Ladekabel nach Anspruch 8 oder 9, **dadurch gekennzeichnet, dass** der Haltegriff (20) ein Griffteil (21) umfasst, durch das ein von einem Leitervorlaufpfad (23) des Vorlaufpfads (17) abgezweigter Griffvorlaufpad (24) des Vorlaufpfads (17) verläuft.

11. Verfahren zum Laden einer Traktionsbatterie (2) eines elektrisch batteriebetriebenen Kraftfahrzeugs (1), umfassend folgende Verfahrensschritte:
- Bereitstellen eines Ladekabels (3) nach einem der
Ansprüche 1 bis 10;
- Anschließen des Ladesteckers (4) des Ladekabels (3) an
eine Ladebuchse (6) des Kraftfahrzeugs (1);
- Kühlen oder Erwärmen des Ladesteckers (4) mittels der Temperiervorrichtung, insbesondere Kühlen oder Erwärmen des Gehäuses (10) und/oder des Haltegriffs (20) des Ladesteckers (4) mittels der Temperiervorrichtung (16).

12. Verfahren nach Anspruch 11, **dadurch gekennzeichnet, dass** das Kühlen oder Erwärmen des Ladesteckers (4), des Gehäuses (10) und/oder des Haltegriffs (20) vor dem Anschließen des Ladesteckers (4) und/oder nach dem Anschließen des Ladesteckers (4) erfolgt.

13. Verfahren nach einem der Ansprüche 11 oder 12, wobei das Ladekabel (3) ein Ladekabel (3) nach einem der Ansprüche 5 bis 7 ist, **dadurch gekennzeichnet, dass** durch den Temperatursensor (26;27) kontinuierlich eine Temperatur des Ladesteckers (4) gemessen wird, wobei das Kühlen oder Erwärmen des Ladesteckers (4), des Gehäuses (10) und/oder des Haltegriffs (20) in Abhängigkeit der gemessenen Temperatur erfolgt.

14. Verfahren nach einem der Ansprüche 11 bis 13, **dadurch gekennzeichnet, dass** mittels eines Helligkeitssensors (7) einer mit dem Ladekabel (3) verbundenen Ladesäule (5) eine vorherrschende Sonneneinstrahlungsintensität gemessen wird, wobei das Kühlen oder Erwärmen des Ladesteckers (4), des Gehäuses (10) und/oder des Haltegriffs (20) in Abhängigkeit der gemessenen Sonneneinstrahlungsintensität erfolgt.
